# EUROPEAN PATENT SPECIFICATION

(11) **EP 3 296 449 B1**
(45) Date of publication and mention of the grant of the patent: **12.02.2020**
(21) Application number: 16795858.6
(22) Date of filing: 13.05.2016
(51) Int. Cl.: D06F 39/14, D06F 37/28, F16C 17/08

(54) **FOLDABLE LID AND WASHING MACHINE**
KLAPPBARER DECKEL UND WASCHMASCHINE
COUVERCLE PLIANT ET MACHINE À LAVER

(30) Priority: 15.05.2015 JP 2015100334
(43) Date of publication of application: 21.03.2018
(73) Proprietor: Aqua Co., Ltd., Chiyoda-ku Tokyo 100-0005 (JP); Qingdao Haier Washing Machine Co., Ltd., Shandong 266101 (CN)
(72) Inventor: TSUCHIDA, Toshiyuki, Tokyo 100-0005 (JP)
(74) Representative: Ziebig, Marlene
(86) International application number: PCT/CN2016/082108
(87) International publication number: WO 2016/184371

(56) References cited:
- CN-A- 1 521 332
- CN-A- 1 869 316
- CN-U- 202 247 419
- CN-Y- 2 665 183
- CN-Y- 2 665 183
- CN-Y- 2 890 132
- JP-A- H11 132 225
- JP-A- 2000 279 689
- JP-A- 2000 342 893
- JP-A- 2001 009 192
- JP-A- 2002 159 794
- JP-A- 2004 081 648

## Description

### TECHNICAL FIELD

The present invention relates to a foldable lid and a washing machine with the foldable lid.

### BACKGROUND

A housing of an ordinary washing machine is provided with an inlet-outlet for taking in and taking out washings, and the inlet-outlet is opened and closed by a lid. For such a lid, a case of using a foldable lid exists. A structure including a resinous first lid portion, a resinous second lid portion, and a metallic connecting shaft for connecting the first lid portion and the second lid portion and capable of being folded by using the connecting shaft as a center is imagined.

A foldable lid with the features of the preamble of claim 1 is known from CN 2665183 Y.

### SUMMARY

### [Problems to be solved by the invention]

An outer periphery of an axial end surface portion of a metallic connecting shaft may have burrs sometimes. A resinous first lid portion and a resinous second lid portion may have a resin portion axially opposite to the end surface portion of the connecting shaft. Since the resin portion is scraped by the burrs on the end surface portion of the connecting shaft when the connecting shaft rotates along with the folding and unfolding of the lid, a through hole is finally formed in the resin portion, and the connecting shaft may protrude from the through hole.

The present invention adopts a technical solution completed with respect to the problems, and aims at providing a foldable lid capable of preventing the resin portion from being scraped by the connecting shaft and a washing machine with the foldable lid.

### Solution for solving the problems

The present invention relates to a foldable lid, including a resinous first lid portion, a resinous second lid portion, and a metallic connecting shaft for connecting the first lid portion and the second lid portion, wherein the foldable lid is capable of being folded by using the connecting shaft as a center; and further including a concave portion, which is arranged on at least one of the first lid portion and the second lid portion, and is configured to be inserted by an axial end portion of the connecting shaft; and a convex portion, arranged on a bottom of the concave portion, protruding towards an axial end surface portion of the end portion and contacting a portion, which is closer to the inner side than an outer periphery, of the end surface portion.

In addition, in the present invention, the convex portion is formed in a semispherical shape.

In addition, the present invention relates to a washing machine, including a housing, provided with an inlet-outlet for taking in and taking out washings; and the foldable lid for opening and closing the inlet-outlet.

### Effects of the invention

Through the present invention, for the lid, the resinous first lid portion and the resinous second lid portion are connected through the metallic connecting shaft, and the lid can be folded by using the connecting shaft as a center. At least one of the first core portion and the second lid portion is provided with the concave portion configured to be inserted by the axial end portion of the connecting shaft.

The bottom of the concave portion is provided with a convex portion protruding towards an axial end surface portion of the end portion. The convex portion contacts a portion, which is closer to the inner side than the outer periphery, of the end surface portion. Therefore, since burrs which may exist on the outer periphery of the end surface portion is away from the bottom of the concave portion through the convex portion, the resin portion on the bottom of the concave portion can be prevented from being scraped by the burrs of the connecting shaft.

In addition, through the present invention, when the convex portion is in a semispherical shape, the convex portion can be formed only by arranging a semispherical recess corresponding to the convex portion on an existing metal mold for forming the concave portion.

### BRIEF DESCRIPTION OF THE DRAWINGS

Fig. 1 is schematic three-dimensional diagram illustrating a washing machine of an embodiment of the present invention observed from a rear side;
Fig. 2 is schematic three-dimensional diagram illustrating an upper portion of a washing machine with a lid being in a folded state observed from a rear side;
Fig. 3 is an exploded three-dimensional diagram illustrating a lid;
Fig. 4 is a diagram illustrating an inner surface portion of a lid in a completed state; and
Fig. 5 is an enlarged view illustrating a main portion of Fig. 4.

### DETAILED DESCRIPTION

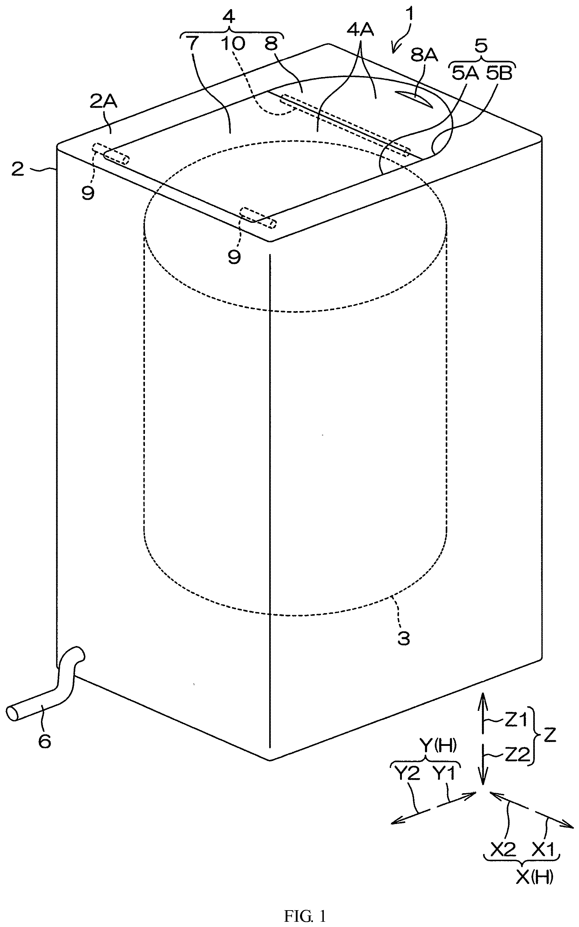

Embodiments of the present invention are specifically described below with reference to drawings. Fig. 1 is schematic three-dimensional diagram illustrating a washing machine of an embodiment of the present invention observed from a rear side. An outline of a washing machine 1 is described by utilizing an up-down direction Z, a left-right direction X and a front-rear direction Y shown in Fig. 1. The directions are defined as directions when the washing machine 1 is observed from a front side. The up-down direction Z includes an upper direction Z1 and a lower direction Z2. The left-right direction X includes a left direction X1 and a right direction X2. The front-rear direction Y includes a front direction Y1 and a rear direction Y2. The left-right direction X and the front-rear direction Y are included in a horizontal direction H.

The washing machine 1 not only includes a washing machine without a drying function, but also includes a washing and drying machine with a drying function. The washing machine 1 includes a box-shaped housing 2 which is longer in the up-down direction Z, a cylindrical washing drum 3 arranged in the housing 2, and a foldable lid 4 installed in the housing 2.

The housing 2 is, for example, metallic and is formed in a box shape. Although the upper surface 2A of the housing 2 in the present embodiment is flat along the horizontal direction H, the upper surface 2A may also be inclined in a manner of falling towards the front direction Y1 relative to the horizontal direction H. The upper surface 2A is provided with an inlet-outlet 5 for taking in and taking out washings. The inlet-outlet 5 has an arbitrary shape. From the top view of the upper direction Z1, the inlet-outlet 5 in the present embodiment includes an approximately-rectangular first region 5A, and an approximately-semicircular second region 5B expanded towards the front direction Y1 continuously from the first region 5A. The periphery of the inlet-outlet 5 of the upper surface 2A is provided with a display operating portion (not shown) formed by a switch, a liquid crystal panel and the like.

The washing drum 3 is a cylinder with a bottom at a lower end. The washing drum 3 may be configured as that a center axis extends towards the up-down direction Z and may also be configured to be inclined relative to the up-down direction Z. The washing drum 3 is configured in the housing 2 in the lower direction Z2 of the inlet-outlet 5. The washings to be washed are thrown into the washing drum 3 from the inlet-outlet 5, and the washed washings in the washing drum 3 are taken out of the inlet-outlet 5. The washing drum 3 can rotate in a state of storing water. Thus, the washings in the washing drum 3 are washed. The water stored in the washing drum 3 is discharged out of the washing machine through a water discharging hose 6 pulled out of the housing 2.

A lid 4 is configured to open and close the inlet-outlet 5. As shown in Fig. 1, the lid 4 closing the inlet-outlet 5 is in a state along the upper surface 2A of the housing 2. The lid 4 in this state has a shape consistent with the inlet-outlet 5 when in top view. The lid 4 of the present embodiment includes a first lid portion 7 formed in an approximately-rectangular flat shape consistent with the first region 5A; and a second lid portion 8 formed into an approximately-semicircular flat shape consistent with the second region 5B. Both the first lid portion 7 and the second lid portion 8 are resinous. A rear end portion of the first lid portion 7 is rotatably supported by a supporting shaft 9 protruding into the inlet-outlet 5 from the housing 2.

The lid 4 includes a metallic connecting shaft 10. The connecting shaft 10 is formed in a cylindrical shape extending in the left-right direction X in a slender manner on boundary portions of the first lid portion 7 and second lid portion 8. Therefore, the axial direction of the connecting shaft 10 is the left-right direction X. The connecting shaft 10 connects the first lid portion 7 and the second lid portion 8. The first lid portion 7 and the second lid portion 8 move relative to each other by rotating around the connecting shaft 10.

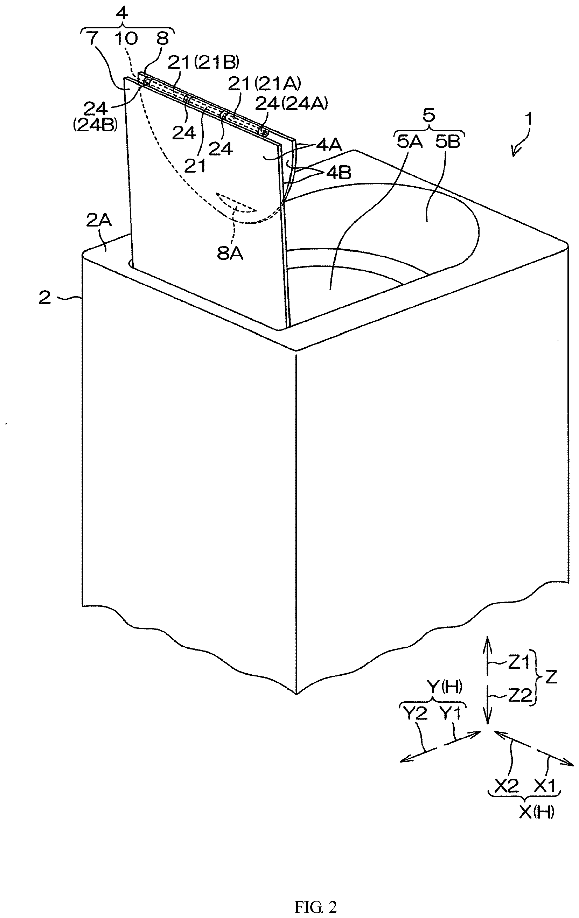

On the lid 4 where the inlet-outlet 5 is closed, a front end portion of the upper surface portion of the second lid portion 8 is provided with a recess 8A. When a user puts fingers in the recess 8A, and presses the second lid portion 8 towards the rear direction Y2, the connecting shaft 10 draws back while rising. Meanwhile, the second lid portion 8 rotates towards the lower direction Z2 by using the rear end portion of the rising connecting shaft 10 side as a center while drawing back, and the first lid portion 7 rotates towards the rear direction Y2 in such a manner that the front end portion of the connecting shaft 10 side rises. Thus, finally as shown in Fig. 2, the lid 4 is folded by using the connecting shaft 10 as a center in such a manner that the second lid portion 8 is overlapped with an approximately-upright first lid portion 7 from the front direction Y1, and in this state, the inlet-outlet 5 is opened towards the upper direction Z1. Thus, the washings can be take in and taken out. When the inlet-outlet 5 is in an open state, the user puts the fingers in the recess 8A and pulls out the second lid portion 8 towards the front direction Y1, the lid 4 is unfolded by operating the first lid portion 7 and the second lid portion 8 in reverse actions, and the inlet-outlet 5 is closed from the upper direction Z1 (referring to Fig. 1).

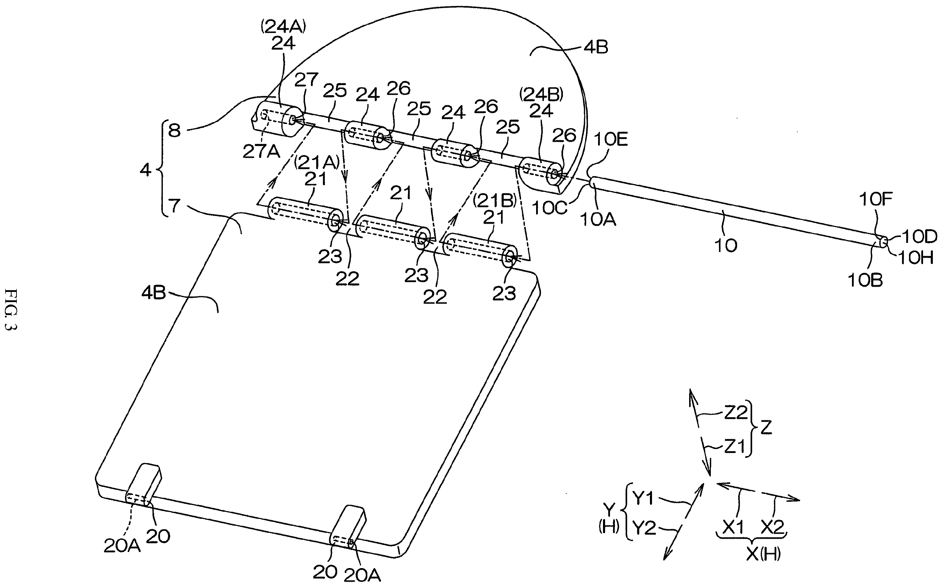

Next, the lid 4 is described in detail. Fig. 3 is an exploded three-dimensional diagram illustrating the lid 4. Fig. 3 not only shows a surface portion 4A, exposed out of the housing 2, of the lid 4 in a state of closing the inlet-outlet 5 (referring to Fig. 1), but also shows an inner surface portion 4B exposed into the housing 2.

Referring to Fig. 3, the rear end portion of the first lid portion 7 is integrally provided with a pair of supporting portions 20 separated in the left-right direction X. The supporting portions 20 are respectively formed in a small-piece shape. An insertion through hole 20A for a supporting shaft 9 of the housing 2 to insert (referring to Fig. 1) is formed in the rear end portion of each supporting portion 20.

The front end portion of the first lid portion 7 is integrally provided with a plurality of first connecting portions 21 which are arranged in parallel in the left-right direction X. In the present embodiment, three first connecting portions 21 are arranged in a manner of extending out of a front end edge of the first lid portion 7 towards the front direction Y1. A gap 22 is formed between two adjacent first connecting portions 21. Among the three first connecting portions 21, the first connecting portion 21A on the left end is configured to be deviated more towards the right direction X2 than the left end edge of the first lid portion 7, and the first connecting portion 21B on the right end is configured to be deviated more towards the left direction X1 than the right end edge of the first lid portion 7.

Each first connecting portion 21 is, for example, in a cylindrical shape extending towards the left-right direction X in a slender manner, and a through hole 23 enabling the first connecting portion 21 to run through along the left-right direction X is formed in the circle center of the first connecting portion 21. The through hole 23 is formed in a circular shape having a diameter slightly greater than an outer diameter of the connecting shaft 10 when being observed from the left-right direction X. The through holes 23 of all first connecting portions 21 are configured to be in a coaxial shape in an almost-completely overlapped manner when being observed from the left-right direction.

The rear end portion of the second lid portion 8 is integrally provided with a plurality of second connecting portions 24 in parallel in the left-right direction X. In the present embodiment, four second connecting portions 24 are arranged in a manner of extending out of the rear end edge of the second lid portion 8 in the rear direction Y2. A gap 25 is formed between two adjacent second connecting portions 24. Among the four second connecting portions 24, the second connecting portion 24A on the left end is configured to be deviated more towards the right direction X2 than the left end edge of the second lid portion 8, and the second connecting portion 24B on the right end is configured to be deviated more towards the left direction X1 than the right end edge of the second lid portion 8.

Each second connecting portion 24 is, for example, in a cylindrical shape extending towards the left-right direction X in a slender manner. Among the four second connecting portions 24, a through hole 26 enabling the second connecting portion 24 to run through along the left-right direction X is formed in the circle centers of the second connecting portions 24 except for the second connecting portion 24A on the left end. The through hole 26 is formed in a circular shape having a diameter slightly greater than the outer diameter of the connecting shaft 10 when being observed from the left-right direction X. The through holes 26 of the second connecting portions 24 except for the second connecting portion 24B on the right end are configured to be in a coaxial shape in an almost-completely overlapped manner when being observed from the left-right direction X. On the other hand, since the through hole 26 of the second connecting portion 24B on the right end is not coaxial with the through holes 26 of other second connecting portions 24 when being observed from the left-right direction X, the through hole 26 has a portion which is not overlapped with the through holes 26 of other second connecting portions 24.

A concave portion 27 recessed towards the left direction X1 from the right end surface of the second connecting portion 24A is formed in the circle center of the second connecting portion 24A on the left end. Although the concave portion 27 is formed in a circular shape having a diameter slightly greater than the outer diameter of the connecting shaft 10 when being observed from the left-right direction X, the concave portion 27 differs from the through hole 26 and does not enable the second connecting portion 24A to run through along the left-right direction X. Therefore, the concave portion 27 has a circular bottom 27A on the left end.

When the first lid portion 7 and the second lid portion 8 are assembled, the gap 22 between two adjacent first connecting portions 21 is provided with a second connecting portion 24, and the gap 25 between two adjacent second connecting portions 24 is provided with a first connecting portion 21. In addition, the second connecting portion 24A on the left end is configured in the left direction X1 of the first connecting portion 21A on the left end, and the second connecting portion 24B on the right end is configured in the right direction X2 of the first connecting portion 21B on the right end. In this state, when being observed from the left-right direction X, the through hole 23 of each first connecting portion 21, the concave portion 27 of the second connecting portion 24A and the through holes 26 of the second connecting portions 24 except for the second connecting portion 24B are configured to be coaxial in an almost completely overlapped manner, and the through hole 26 of the second connecting portion 24B is slightly deviated from other through holes 23 and 26 and the concave portion 27.

In the assembled state of the first lid portion 7 and the second lid portion 8, the connecting shaft 10 adopts the end portion 10A in the left direction X1 as a head portion to insert in the through hole 26 of the second connecting portion 24B from the right direction X2 as shown by a dotted arrow. Moreover, the end portion 10A of the connecting shaft 10 is inserted in the through hole 26 of the second connecting portion 24 and the through hole 23 of the first connecting portion 21 and finally inserted into the concave portion 27 of the second connecting portion 24A from the right direction X2. Therefore, the lid 4 is completed. The bottom 27A of the concave portion 27 forms a bearing surface configured to be opposite to the end portion 10A of the connecting shaft 10 from the left direction X1.

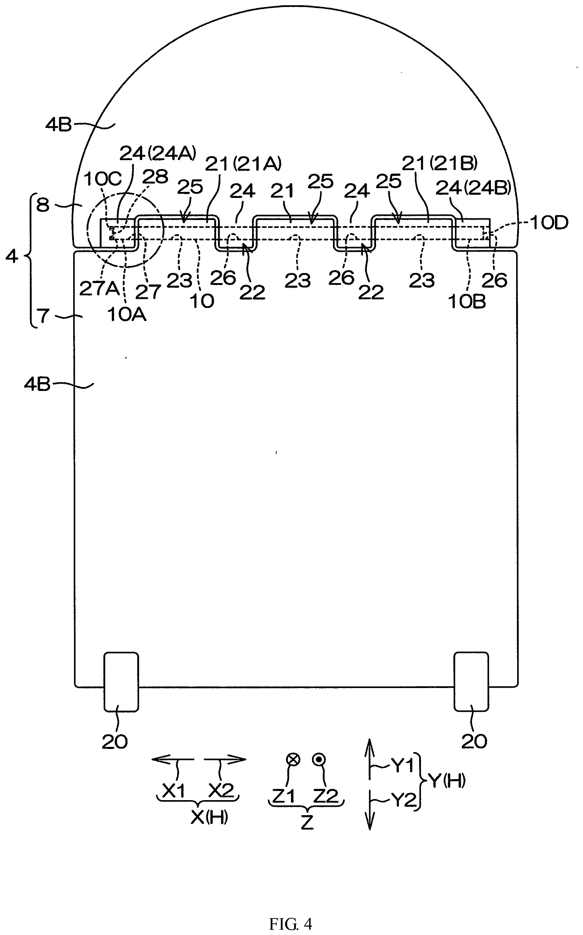

Referring to Fig. 4 illustrating the inner surface portion 4B of the lid 4 in a completed state, when the end portion 10A of the connecting shaft 10 is inserted into the concave portion 27 to complete the lid 4, the end portion 10B in the right direction X2 of the connecting shaft 10 is in a state of being inserted in the through hole 26 of the second connecting portion 24B. In addition, the portion between the end portion 10A and the end portion 10B of the connecting shaft 10 is in a state in which the through hole 23 of each first connecting portion 21 and the through hole 26 of each second connecting portion 24 are mutually inserted. Thus, since the first connecting portion 21, the second connecting portion 24 and the connecting shaft 10 function as a hinge, the lid 4 can be folded while being unfolded by using the connecting shaft 10 as a center as described above. It should be stated that, as described above, since the through hole 26 of the second connecting portion 24B is configured to be slightly deviated from other through holes 23 and 26 and the concave portion 27, the lid 4 in the completed state prevents the connecting shaft 10 from being easily separated from the through hole 26 of the second connecting portion 24B in the right direction X2. Since the connecting shaft 10 is inserted in the through holes 23 and 26 and the concave portion 27 in a manner of leaving leeway, the connecting shaft 10 can rotate freely in the through holes 23 and 26 and the concave portion 27.

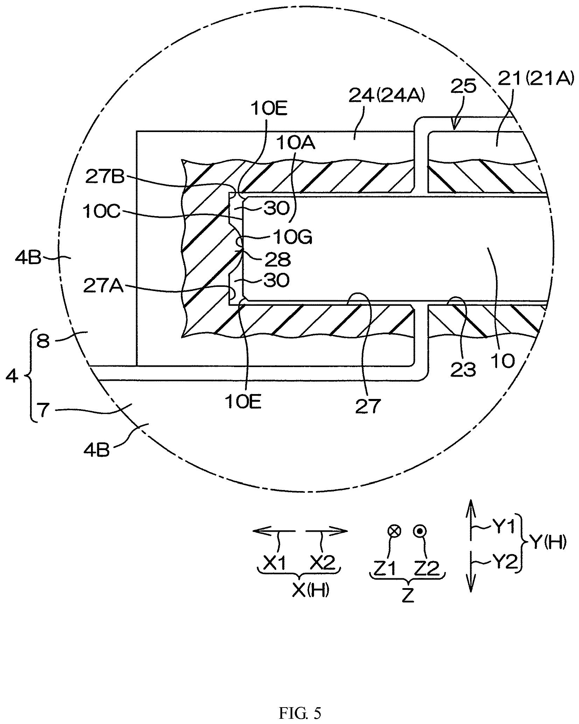

Fig. 5 is an enlarged view illustrating a main portion enclosed by dotted lines in Fig. 4. In Fig. 5, a peripheral portion of the concave portion 27 in the second connecting portion 24A on the left end and a peripheral portion of the through hole 23 in the first connecting portion 21A adjacent to the second connecting portion 24A from the right direction X2 are indicated by a section in a manner of drawing section lines.

The connecting shaft 10 is produced by cutting a metal bar serving as a material into specified lengths. Therefore, for the connecting shaft 10, the circular end surface portion 10C of the end portion 10A in the left direction X1 and the circular end surface portion 10D of the end portion 10B in the right direction X2 (also referring to Fig. 3) form a cut surface of the metal bar. Therefore, an outer periphery 10E of the end surface portion 10C and an outer periphery 10F of the end surface portion 10D may have burrs generated due to the cutting of the metal bar. Generally, the outer periphery 10E and the outer periphery 10F are chamfered to remove the burrs. However, due to the chamfering precision and the dimensional difference of the connecting shaft 10, a case where the burrs are not completely removed exists. Therefore, as the connecting shaft 10 rotates along with the folding and unfolding of the lid 4 for opening and closing, the bottom 27A inserted in the concave portion 27 of the end portion 10A of the connecting shaft 10 may be scraped by the burrs on the outer periphery 10E of the end surface portion 10C of the end portion 10A. In a most severe case, a through hole may be formed in the bottom 27A, and the connecting shaft 10 protrudes from the through hole to the left direction X1.

Therefore, the bottom 27A of the concave portion 27 is integrally provided with a convex portion 28. The convex portion 28 is arranged on the circular bottom 27A on a central portion closer to the circle center side than the peripheral portion 27B. The convex portion 28 protrudes towards the end surface portion 10C in the left direction X1 in the end portion 10A in the left direction X1 of the connecting shaft 10 to the right direction X2 and is in a state of contacting a portion 10G, which is closer to the inner side than the outer periphery 10E, of the circular end surface portion 10C. Thus, a gap 30 in the left-right direction X is arranged between the outer periphery 10E of the end surface portion 10C and the outer periphery 27B of the bottom 27A of the concave portion 27. Therefore, since the burrs which may exist on the outer periphery 10E of the end surface portion 10C are away from the bottom 27A of the concave portion 27 through the convex portion 28, the resin portion on the bottom 27A of the concave portion 27 can be prevented from being scraped by the burrs of the connecting shaft 10. As a result of the above, by suppressing the year-on-year damage of the opening and closing actions on the lid 4, the durability of the lid 4 may be improved.

It should be noted that preferably, the portion 10G, which is closer to the inner side than the outer periphery 10E, of the end surface portion 10C is a circle center portion of the end surface portion 10C. In this case, since the convex portion 28 contacting the end surface portion 10C is enabled to be away from the outer periphery 10E, the convex portion 28 can be prevented from being scraped by the burrs on the outer periphery 10E.

The shape of the convex portion 28 can be selected arbitrarily, but the convex portion 28 is preferably formed in a semispherical shape protruding towards the right direction X2. In this case, the convex portion 28 can be formed only by arranging a semispherical recess corresponding to the convex portion 28 on the existing metal mold for forming the concave portion 27.

Although embodiments of the present invention are described above, various modifications beyond the above may be made to the present invention within the recorded scope of claims.

For example, although the concave portion 27 is arranged on the second connecting portion 24A on the left end of the second lid portion 8 in the above embodiment, the concave portion 27 may also be arranged on the second connecting portion 24B on the right end (referring to Fig. 4). In other words, by replacing the above through hole 26, the concave portion 27 which is recessed towards the right direction X2 from the left end surface of the second connecting portion 24B may also be arranged on the second connecting portion 24B on the right end. In this case, the end portion 10B in the right direction X2 of the connecting shaft 10 is inserted into the concave portion 27 of the second connecting portion 24B from the left direction X1, and the convex portion 28 of the bottom 27A of the concave portion 27 contacts the portion 10H (referring to Fig. 3), which is closer to the inner side than the outer periphery 10F, of the end surface portion 10D of the end portion 10B.

Furthermore, in the case where the first connecting portion 21A on the left end of the first lid portion 7 is disposed on a position closer to the left direction X1 than the second connecting portion 24A, the concave portion 27 is not arranged on the second connecting portion 24B but arranged on the first connecting portion 21A. Of course, in the case where the first connecting portion 21B on the right end of the first lid portion 7 is disposed on a position closer to the right direction X2 than the second connecting portion 24B on the right end of the second lid portion 8, the concave portion 27 may also be arranged on the first connecting portion 21B. In general, the concave portion 27 can be arranged on at least one of the first lid portion 7 and the second lid portion 8. Therefore, for the structure in which the second connecting portion 24A is disposed on the position closer to the left direction X1 than the first connecting portion 21A or the first connecting portion 21B is disposed on the position closer to the right direction X2 than the second connecting portion 24B, a case in which both the first connecting portion 21B of the first lid portion 7 and the second connecting portion 24A of the second lid portion 8 are provided with the concave portion 27 may also exist. Of course, for the structure in which the first connecting portion 21A is disposed on the position closer to the left direction X1 than the second connecting portion 24A or the second connecting portion 24B is disposed on the position closer to the right direction X2 than the first connecting portion 21B, the case is the same.

Additionally, although the above lid 4 is configured to be folded into two by having two lid portions, i.e. the first lid portion 7 and the second lid portion 8, the lid may also be folded into more than three by having more than three lid portions. In the lid 4 which can be folded into more than three, one of two adjacent lid portions is configured as the first lid portion 7, and the other is configured as the second lid portion 8.

### List of reference numerals:

1: Washing machine; 2: Housing; 4: Lid; 5: Inlet-outlet; 7: First lid portion; 8: Second lid portion; 10: Connecting shaft; 10A: End portion; 10B: End portion; 10C: End surface portion; 10D: End surface portion; 10E: Outer periphery; 10F: Outer periphery; 10G: Portion; 10H: Portion; 27: Concave portion; 27A: Bottom; 28: Convex portion; X: Left-right direction.

## Claims

1. A foldable lid, comprising a resinous first lid portion (7), a resinous second lid portion (8), and a metallic connecting shaft (10) for connecting the first lid portion (7) and the second lid portion (8), wherein the foldable lid is capable of being folded by using the connecting shaft (10) as a center; and **characterised by** further comprising:
a concave portion (27), which is arranged on at least one of the first lid portion (7) and the second lid portion (8), and is configured to be inserted by an axial end portion (10A) of the connecting shaft (10); and
a convex portion (28), arranged on a bottom (27A) of the concave portion (27), protruding towards an axial end surface portion (10C) of the end portion (10A) of the connecting shaft and contacting a portion (1 (10G) of the shaft, which is closer to an inner side than an outer periphery (10E), of the end surface portion (10C).

2. The foldable lid according to claim 1, wherein the convex portion (28) is formed in a semispherical shape.

3. A washing machine, comprising:
a housing (2), provided with an inlet-outlet (5) for taking in and taking out washings; and
a foldable lid according to claim 1 or 2 for opening and closing the inlet-outlet (5).

## Patentansprüche

1. Klappbarer Deckel, der einen ersten Deckelabschnitt (7) aus Harz, einen zweiten Deckelabschnitt (8) aus Harz und einen metallischen Verbindungsstab (10) zum Verbinden des ersten Deckelabschnitts (7) und des zweiten Deckelabschnitts (8) umfasst, wobei der klappbare Deckel unter Verwendung des Verbindungsstabs (10) als einer Mitte geklappt werden kann; und **dadurch gekennzeichnet ist, dass** er ferner umfasst:
einen konkaven Abschnitt (27), der an wenigstens einem aus dem ersten Deckelabschnitt (7) und dem zweiten Deckelabschnitt (8) angeordnet ist und dazu ausgestaltet ist, einen axialen Endabschnitt (10A) des Verbindungsstabes (10) aufzunehmen; und
einen konvexen Abschnitt (28), der an einer Unterseite (27A) des konkaven Abschnitts (27) angeordnet ist, hin zu einem axialen Endflächenabschnitt (10C) des Endabschnitts (10A) des Verbindungsstabes vorsteht und mit einem Abschnitt (10G) des Stabes in Kontakt steht, der sich näher an einer Innenseite als an einer äußeren Peripherie (10E) des Endflächenabschnitts (10C) befindet.

2. Klappbarer Deckel nach Anspruch 1, wobei der konvexe Abschnitt (28) in einer Halbkreisform ausgebildet ist.

3. Waschmaschine, umfassend:
ein Gehäuse (2), das mit einem Einlass/Auslass (5) zum Einlegen und Herausnehmen von Wäschestücken versehen ist; und
einen faltbaren Deckel nach Anspruch 1 oder 2 zum Öffnen und Verschließen des Einlasses/Auslasses (5).

## Revendications

1. Couvercle pliable, comprenant une première partie (7) de couvercle en résine, une deuxième partie (8) de couvercle en résine, et une barre de connexion (10) métallique destinée à raccorder la première partie (7) de couvercle et la deuxième partie (8) de couvercle, ledit couvercle pliable pouvant être plié au moyen de la barre de connexion (10) utilisée comme centre ; **caractérisé en ce qu'**il comprend en outre :
une partie concave (27) présentée sur la première partie (7) de couvercle et/ou la deuxième partie (8) de couvercle, et prévue pour recevoir une partie d'extrémité axiale (10A) de la barre de connexion (10) ; et
une partie convexe (28) présentée sur le fond (27A) de la partie concave (27), faisant saillie vers une partie de surface d'extrémité axiale (10C) de la partie d'extrémité (10A) de la barre de connexion et étant en contact avec une partie (10G) de la barre plus proche d'un côté intérieur que d'une périphérie extérieure (10E) de la partie de surface d'extrémité (10C).

2. Couvercle pliable selon la revendication 1, où la partie convexe (28) est de forme hémisphérique.

3. Machine à laver, comprenant :
une carrosserie (2) pourvue d'une entrée-sortie (5) pour le chargement et le déchargement du linge ; et
un couvercle pliable selon la revendication 1 ou la revendication 2 pour l'ouverture et la fermeture de l'entrée-sortie (5).
